# EUROPEAN PATENT APPLICATION

(11) **EP 4 841 573 A1**
(43) Date of publication of application: **18.11.2026**
(21) Application number: 25176753.9
(22) Date of filing: 15.05.2025
(51) Int. Cl.: G06T 15/08

(54) **METHOD AND APPARATUS FOR RENDERING A VOLUMETRIC DATASET**

(71) Applicant: Siemens Healthineers AG, 91301 Forchheim (DE)
(72) Inventor: Bohn, Lars, 91077 Neunkirchen am Brand (DE); Dingeldey, Felix, 91056 Erlangen (DE)
(74) Representative: Siemens Healthineers Patent Attorneys

(57) **Abstract**

A computer-implemented method renders a volumetric dataset representing a volume. The volumetric dataset includes multiple sets of volume data obtained by different imaging processes, each with different imaging characteristics. The method performs a volume rendering process using these multiple sets of volume data to render an image of the volume. During rendering, the method generates one or more visual parameter values for a given location in the image for determining an image display value. At least one of these visual parameter values is generated based on a combination of the multiple sets of volume data.

## Description

### Technical Field

The present disclosure relates to the field of computer graphics and image processing, specifically to methods and systems for rendering volumetric datasets. More particularly, the disclosure relates to techniques for rendering volumetric data that has been obtained from multiple imaging processes with different imaging characteristics.

### Background

Volumetric data may be used to visualise a volume containing an object of interest, such as a body part in a medical scan. Scans of one volume that include multiple sets of volume data with different characteristics, such as multi-spectral CT and multi-parametric MRI, have recently enabled improvements to the detail with which a body part can be imaged.

It is desirable to improve methods for rendering such sets of volume data to provide a better/more useful visual representation of such data.

### Summary

According to a first aspect of the present invention, there is provided a computer-implemented method for rendering a volumetric dataset representing a volume. The volumetric dataset comprises a plurality of sets of volume data obtained by a respective plurality of imaging processes performed on the volume, wherein each imaging process has a respective, different set of imaging characteristics. The method includes performing a volume rendering process using the plurality of sets of volume data to render an image of the volume. The volume rendering process includes generating, for a given location in the image, one or more visual parameter values for use in determining an image display value for the given location. A given visual parameter value is generated based on a combination of the plurality of sets of volume data.

The plurality of imaging processes may be respective, different pulse sequences from a multiparametric magnetic resonance imaging (MRI) study. In some implementations, a first of the sets of imaging characteristics may comprise a first set of wavelengths of electromagnetic radiation, and a second of the sets of imaging characteristics may comprise a second, different set of wavelengths of electromagnetic radiation. In some implementations, the plurality of imaging processes may be respective different spectral ranges in multi-spectral CT imaging, in particular in Photon-counting CT imaging.

The generation of the one or more visual parameter values may include performing a ray tracing process. The ray tracing process may include, for a ray traced during the ray tracing process, performing a sampling process at a plurality of sampling points along the ray. The sampling process may include generating, for the plurality of sampling points, a set of respective sample values based on at least one of the sets of volume data, and using the respective sample values to generate a visual parameter value of the one or more visual parameter values. The sampling distance may be determined based on one or more of the sets of imaging characteristics of the plurality of imaging processes.

For a first ray traced during the ray tracing process, a first sampling process may be performed at a first plurality of sampling points separated by a first sampling distance along the first ray. This first sampling process may include generating a first set of respective sample values based on a first of the sets of volume data. Similarly, for a second ray traced during the ray tracing process, a second sampling process may be performed at a second plurality of sampling points separated by a second sampling distance along the second ray, generating a second set of respective sample points based on a second of the sets of volume data. The first sampling distance may be determined based on the set of imaging characteristics of the first of the sets of volume data, and/or the second sampling distance may be determined based on the set of imaging characteristics of the second of the sets of volume data.

The method may include identifying an approximate location of a boundary between two media in the volume using a first of the sets of volume data, and identifying a refined location of the boundary using a second of the sets of volume data.

When generating the given visual parameter value, the method may include determining, for a given sampling location in the volumetric dataset from which the given visual parameter value is at least partly calculated, whether a given set of the sets of volume data is to be used when determining a sample value for the given sampling location. This determination may be based on segmentation data indicative of a segment associated with the sampling location. In some implementations, determining whether the given set of the sets of volume data is to be used may include determining that the given set of volume data is not to contribute to the sample value when the given sampling location and a surface of the segment with which the given sampling location is associated meet a proximity condition.

The method may further include determining an interpolation method based on the set of image characteristics for one or more of the sets of volume data, interpolating a volume value for a sampling location from a first of the sets of volume data using the interpolation method, and using the volume value in generating the one or more visual parameter values.

The method may also include determining a further interpolation method based on the set of image characteristics for a second of the sets of volume data. A further volume value for the sampling location may be interpolated from that set of volume data using the further interpolation method, and this further volume value may be used in generating the one or more visual parameter values.

The method may include determining an input to an illumination model for a sampling location using the combination of the plurality of sets of volume data, and using the illumination model to perform the volume rendering process to generate the one or more visual parameter values. The input to the illumination model may comprise various parameters such as an opacity, a colour, a geometric characteristic, and/or a surface optical characteristic.

When the input to the illumination model comprises a geometric characteristic, this characteristic may include a surface normal, a surface tangent, or a surface curvature. When the input to the illumination model comprises a surface optical characteristic, this characteristic may include a specularity, a roughness, an anisotropy, or a sub-surface translucency.

The volume rendering process may comprise a path tracing process. In implementations involving path tracing, the path tracing process may include determining a first accumulated opacity value along a path using a first of the sets of volume data, and comparing the first accumulated opacity value with a first threshold corresponding to that set of volume data. A scattering event may be triggered based at least in part on a determination that the first accumulated opacity value exceeds the first threshold. Similarly, the path tracing process may include determining a second accumulated opacity value along a path using a second of the sets of volume data, and comparing the second accumulated opacity value with a second, different threshold corresponding to that set of volume data. A scattering event may be triggered based at least in part on a determination that the second accumulated opacity value exceeds the second threshold.

In some implementations, the first accumulated opacity value and the second accumulated opacity value may be for the same path, and the scattering event may be triggered only if both the first accumulated opacity value exceeds the first threshold and the second accumulated opacity value exceeds the second threshold. The first threshold may be equal to the second threshold in certain implementations. Alternatively, the first threshold may be a first random value generated from a first distribution, and the second threshold may be a second random value generated from a second, different distribution.

In the path tracing process, the method may include determining, for a sampling location on a path segment of a path traced during the path tracing process, a contributing set of volume data from among the plurality of sets of volume data. This determination may be based on at least one of: a ray type for the path segment (which may be a primary ray, a secondary ray, or a shadow ray); if the ray type for the path segment is a secondary ray, whether the path segment resulted from a volume scattering event or an interface scattering event; a distance between the sampling location and a location of a scattering event that resulted in creation of the path segment; a number of path segments traversed by the path up to the path segment; an input received via a user interface; a body region represented by the sampling location; at least one of the imaging processes; an imaging device used in at least one of the imaging processes; or a process used to interpret the image.

The path tracing process may include triggering a scattering event at a scattering location. Triggering the scattering event may comprise determining, based on the sets of volume data at the scattering location, a direction for a new ray to be used in the path tracing process, with the new ray originating at the scattering location. Determining the direction for the new ray may include selecting, from among a respective plurality of phase functions corresponding to the sets of volume data or from among a respective plurality of surface scattering distribution functions corresponding to the sets of volume data, and based on the volume values of the sets of volume data at the scattering location, a phase function or a surface scattering distribution function, and determining the new direction using the phase function or the surface scattering distribution function. Alternatively or additionally, determining the direction for the new ray may include determining a parameter of a phase function based on the volume values of the sets of volume data at the scattering location, and determining the new direction using the phase function or the surface scattering distribution function.

The path tracing process may also include determining a light source function for a path that exits the volume based on which of the sets of volume data were used during accumulation of sample values along the path that exits the volume.

When determining the light source function for a path that exits the volume, the method may determine this function based on which of the sets of volume data was most commonly used during the accumulation of opacity values. Additionally or alternatively, determining the light source function for the path may include determining the function based on whether an initial scattering event along the path that exits the volume is a volume scattering event or a surface scattering event.

In some implementations, the plurality of imaging processes may be performed on the volume concurrently.

According to a second aspect of the present invention, there is provided a set of machine-readable instructions is provided which, when executed by a processor, cause the processor to perform a method according to the first aspect.

According to a third aspect of the present invention, there is provided apparatus comprising a processor and a storage comprising such a set of machine-readable instructions.

### Brief Description of the Figures

Figure 1 is a flow diagram illustrating a method for generating visual parameter values from a plurality of sets of volume data, according to embodiments;
Figure 2 is a perspective view illustrating a ray tracing process used in volume rendering, according to embodiments;
Figure 3 is a perspective view illustrating a path tracing process used in physically-based volume rendering, according to embodiments;
Figure 4 is a block diagram illustrating an apparatus for implementing the volume rendering method shown in Figure 1; and
Figure 5 is a graph illustrating a multi-dimensional transfer function, according to embodiments.

### Detailed description

Independent of the grammatical term usage, individuals with male, female or other gender identities are included within the term.

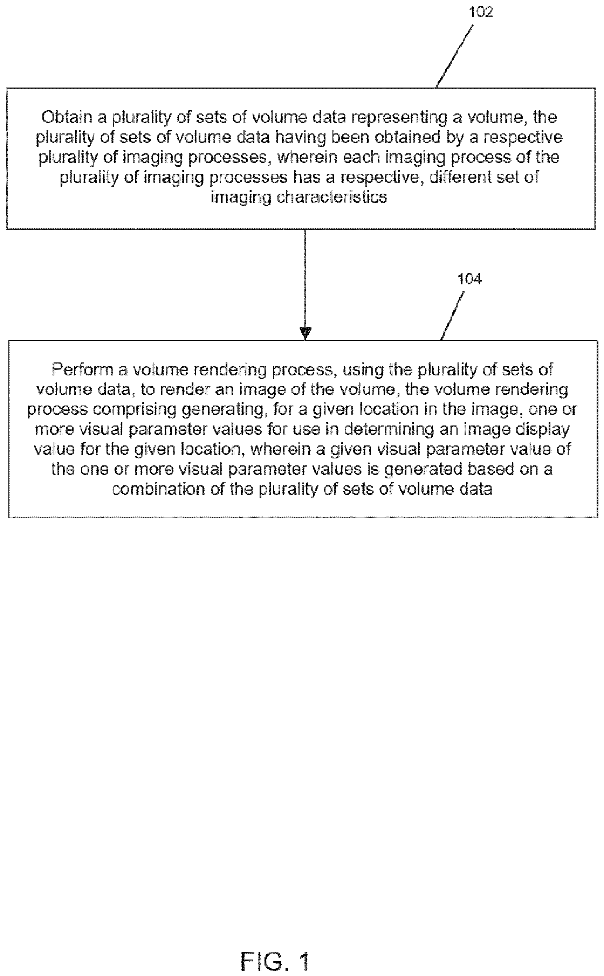

Figure 1 illustrates a method for generating a visual parameter value from a plurality of sets of volume data. The method begins by obtaining a plurality of sets of volume data representing a volume, the plurality of sets of volume data having been obtained by a respective plurality of imaging processes, wherein each imaging process of the plurality of imaging processes has a respective, different set of imaging characteristics, at step 102. Each set of volume data may comprise a plurality of volume values, representing a discrete sampling of a scalar field. The set of volume data may, for example, be received by loading from a memory, sensors, and/or other sources. The volumetric dataset 206 represents a volume which may include a patient or a part of a patient, for example a human or animal patient.

In general, any suitable imaging process may be used to produce each set of volume data. For example, the imaging process may comprise the use of computed tomography (CT), or of magnetic resonance imaging (MRI). Scan data may be provided in the form of multiple two-dimensional (2D) scans or may be formatted from a scan. In some examples, each set of volume data may comprise a stack of 2D image slices. The 2D image slices may comprise compressed slice data, for example, in JPEG2000 format.

In some examples, the plurality of imaging processes are performed on the volume concurrently. For example, the plurality of imaging processes may be respective, different pulse sequences from a multiparametric magnetic resonance imaging (MRI) study. The pulse sequences may include any of a spin echo sequence (e.g. a T1 weighted sequence, a T2 weighted sequence, or a proton density weighted sequence), a gradient echo sequence, an inversion recovery sequence, a diffusion weighted sequence, a perfusion weighted sequence, a functional MRI sequence, or a magnetic resonance angiography sequence. That is, the set of imaging characteristics may represent a pulse sequence of the MRI study. Alternatively, a first of the sets of imaging characteristics may comprise a first set of wavelengths of electromagnetic radiation, and a second of the sets of imaging characteristics may comprise a second, different set of wavelengths of electromagnetic radiation. For example, the volumetric dataset 206 may represent a dual-energy computed tomography (CT) study or a Photon-counting computed tomography (PCCT) study.

In some examples, the volumetric dataset 206 is a large volumetric dataset produced by a high-resolution scanning modality. The volumetric dataset 206 may, for example, have a data size of multiple gigabytes, for example, several hundreds of gigabytes, or multiple terabytes.

The volumetric dataset 206 may comprise data formatted as a plurality of volume values associated with respective voxels. Each set of volume data may comprise a volume value associated with each voxel. That is, each voxel may be associated with a respective volume value for each set of volume data. The voxels may, for example, be in a uniform or non-uniform grid, or may be arranged in some other type of geometry (e.g., polar coordinate format). The voxels of each set of volume data may coincide spatially with each other; that is, at least one voxel in one set of volume data has a corresponding voxel representing the same part of the volume in each other set of volume data. The volume values may be isotropic or anisotropic. Each volume value may typically represent a scalar value obtained by sampling a scalar field, although in some examples the volumetric dataset 206 may comprise data relating to a non-scalar field. The type of volume value represented for each voxel may be dependent on the means by which the volumetric dataset 206 is obtained. For example, where a CT scanner is used to produce the volumetric dataset 206, the dataset may comprise Hounsfield values. The volume values for each voxel may be represented at a given precision, for example, 8-bit or 16-bit.

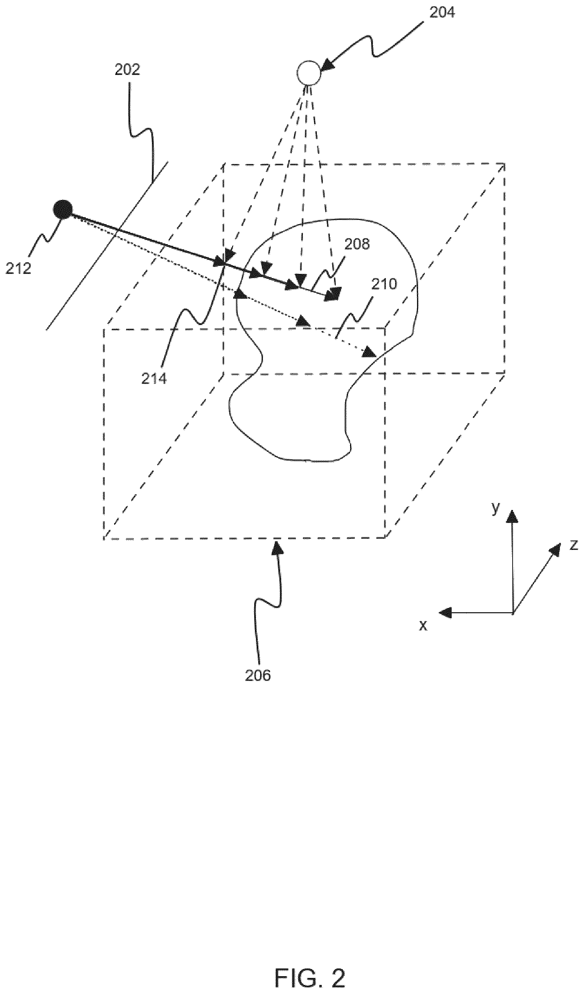

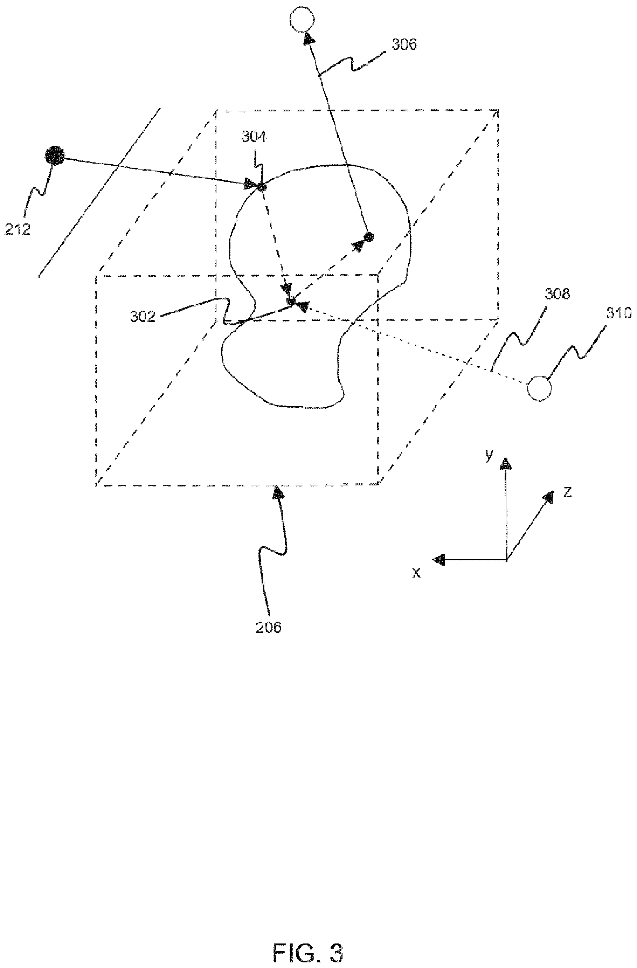

At step 104, the method includes performing a volume rendering process, using the plurality of sets of volume data, to render an image of the volume. The volume rendering process may comprise a ray tracing process. The ray tracing process may be a non-physically based process, e.g., a ray casting process, as described below with reference to Figure 2, or a physically-based process (e.g., a path tracing process, as described below with reference to Figure 3, or another process such as metropolis light transport, radiosity, or photon mapping).

The volume rendering process comprises generating, for a given location in the image, e.g., a pixel, one or more visual parameter values for use in determining an image display value for the given location. A given visual parameter value of the one or more visual parameter values is generated based on a combination of the plurality of sets of volume data.

A visual parameter value may, for example, be an opacity or colour value computed for a ray or a path. A given visual parameter value may, for example, be an opacity and/or colour value accumulated across a plurality of sampling locations 214.The combination of the plurality of sets of volume data may be used at various points during the rendering process to generate the visual parameter values, as described below, by way of example, with reference to Figures 2 and 3. For example, a given visual parameter value may be an RGBA value representing a colour and an opacity. In other examples, multiple visual parameter values may respectively represent colour and opacity, e.g., an RGB value and an alpha value. In other examples, visual parameter values may correspond to different visual parameters usable to determine an image display value. The image display value may, for example, be a pixel intensity, brightness, or colour value for the given location in the image. The image display value may be obtained by compositing a plurality of visual parameter values for a given location, e.g., pixel, in the image plane. For example, the visual parameter values obtained for a given image location may be stored in a buffer, e.g., an HDR buffer, and composited to generate an image display value. The visual parameter values stored in the buffer may be updated as further rays through the volume are simulated.

By using a combination of the plurality of sets of volume data to generate a visual parameter value, the rendering can produce more accurate and informative visualisations of a volumetric dataset. The methods disclosed herein leverage the complementary information contained in different sets of volume data to create renderings that reveal relationships between different data types that might not be apparent when viewing a pixelwise-blended image made up from separate renderings of the separate sets of volume data.

Figure 2 illustrates schematically an example ray tracing process used in volume rendering. The ray tracing process is performed on a volumetric dataset 206. The sets of volume data in the volumetric dataset 206 are in registration with one another with respect to a volume. The volume represented by the volumetric dataset 408 in this example has cuboidal geometry. The volume may include a patient or a part of a patient, for example a human or animal patient.

In the ray tracing process, a viewpoint 212 is defined with respect to the volumetric dataset 206. A viewing plane 202 is also defined and located in front of the viewpoint 212. The viewing plane comprises a plurality of pixels (not shown in Figure 2), e.g. arranged in a grid, and allows construction of a visualisation of the volumetric dataset 206.

In this example, the ray tracing process comprises determining a plurality of rays 208, 210 through the volumetric dataset 206, e.g. by ray casting. Each ray 208, 210 starts at the viewpoint 212 and passes through the viewing plane 202 at a predefined location. The ray directions (i.e. the predefined locations) are generated randomly. In some examples, a direction for a ray 208 to be used in sampling a first set of volume data is generated randomly and independently of a direction of a ray 210 to be used in sampling a second set of volume data, which is also generated randomly. However, in other examples, the same ray may be used to sample both sets of volume data.

Performing the ray tracing process comprises, for a ray 208 traced during the ray tracing process, performing a sampling process at a plurality of sampling points along the ray 208. The sampling process comprises generating, for the plurality of sampling points 214, a set of respective sample values based on at least one of the sets of volume data, and using the respective sample values to generate a visual parameter value of the one or more visual parameter values.

In some examples, the sampling distance is determined based on one or more of the sets of imaging characteristics of the plurality of imaging processes. For example, the sampling distance may be determined based on the finest spatial frequency component measured by one of the imaging processes (in examples where only one set of volume data is used to calculate a sample value, this may be the imaging process for that set of volume data). For example, the sampling distance may be determined using the Nyquist theorem as 1/(2fₘₐₓ) (optionally further divided by the zoom of the imaging apparatus used), where fₘₐₓ is the finest (highest) spatial frequency component in volume data obtained by that imaging process. fₘₐₓ may be a typical, representative value for that imaging process. However, in other examples, the finest spatial frequency component may be determined based on the volume data itself, for example by a Fourier transform of the volume data. The finest spatial frequency component may be determined as, for example, the highest spatial frequency component whose amplitude exceeds a threshold value.

In some examples, the sampling distance is determined based on volume values of one or more of the sets of volume data, for example in the vicinity (e.g. within a predefined number of voxels) of the sampling location. For example, the sampling distance may be determined based on a local value of the contrast for one or more of the sets of volume data. The contrast may be calculated, for example, as the magnitude of the gradient of the volume data at the sampling location.

By determining sampling distance based on the imaging characteristics of an imaging process, the method can optimize the rendering process to account for different resolutions or properties of the various imaging processes.

In some examples, when performing the ray tracing process, a first of the sets of volume data is sampled for a first ray 208, and a second of the sets of volume data is sampled for the second ray 210. In some such examples, the method comprises applying different respective sampling distances for sampling the first of the sets of volume data and for sampling the second of the sets of volume data. For example, the method may comprise determining the first sampling distance based on the set of imaging characteristics of the first of the sets of volume data; and/or determining the second sampling distance based on the set of imaging characteristics of the second of the sets of volume data. By using different sampling distances for different rays 208, 210 based on the specific imaging characteristics of each volume data set, the method enables more efficient and/or accurate rendering that adapts to the unique properties of each data representation. For example, a ray 208 that is used to sample a set of volume data with sharp contrast may use a short sampling distance, to capture in detail the fine structure of the volume data, whereas a ray 210 that is used to sample a set of volume data with low contrast may use a long sampling distance for improved computational efficiency. While the sampling described above is performed for different rays, in some examples, one ray may be used to sample the first set of volume data with the first sampling distance and also to sample the second set of volume data with the second sampling distance.

During sampling for a first set of volume data, a boundary between two media in the volume may be identified, for example based on determining that two adjacent sampling locations belong to different segments (segmentation is described further below). In order to refine an estimate for the location of the boundary along the ray, a sampling process may be performed using a second set of volume data, which may have a higher contrast than the first set of volume data. The refined location of the surface may also be used as a location for a scattering event in a path tracing process, as described further with reference to Figure 3.

In examples, at each sampling location 214, it is determined, e.g. for each set of volume data, whether a given set of volume data is to be used when determining a sample value for the sampling location. This determination is performed based on segmentation data indicative of a segment associated with the sampling location (for example, the segment associated with the nearest voxel to the sampling location). For example, segmentation data corresponding to the volume may indicate a plurality of segments in the volume. The segmentation data may be obtained by a segmentation process performed as part of the rendering method or may be obtained by a segementation process performed prior to the present method. The segments may represent different parts of the patient depicted in the set of volume data (e.g. a heart, a lung), or other objects depicted in the set of volume data (e.g. the table on which the patient or the part of the patient is placed while the set of volume data is captured). The segmentation data may include, for each voxel, a value indicating a segment to which the voxel is determined to belong. The segmentation data may include, for each voxel, a value for each set of volume data indicating a segment (for that set of volume data) to which the voxel is determined to belong. Determining which volume data set to use based on segmentation data allows for targeted visualization where different anatomical structures can be rendered using the most appropriate set of volume data for the given sampling location 214. For example, where segmentation data for a given set of volume data indicates that the given sampling location 214 represents a part of the table on which a body part is placed during the imaging process, it may be desirable to exclude that set of volume data when calculating a sample value for the given sampling location 214. Alternatively, if a particular voxel is determined to represent a certain body part e.g. a patient's heart, then a set of volume data with poor contrast for this body part may be excluded when calculating a sample value.

The method may comprise pre-processing the segmentation data to remove high-frequency components, that is, segments below a certain size (e.g. width or volume), to generate preprocessed segmentation data, on which the determination (of whether a given set of volume data is to be used when determining a sample value) is based. Where for example it is desired not to show small pieces of metal in the image, the pre-processing may be used to eliminate such elements.

The sampling process comprises interpolating a volume value for a sampling location 214 from at least one of the sets of volume data. Any suitable interpolation method may be used, such as nearest-neighbour, trilinear, or tri-cubic interpolation. The sampling points are in general not in perfect coincidence with the centre of any given voxel, hence why it is desirable to interpolate from a plurality of voxels surrounding the sampling location 214.

Determining whether the given set of the sets of volume data is to be used when determining the sample value may comprise determining that the given set of volume data is not to contribute to the sample value responsive to determining that the given sampling location 214, and a surface of the segment to which the given sampling location 214 belongs, meet a proximity condition. By excluding certain volume data from contributing to sample values based on proximity to segment surfaces, the method may prevent artifacts from appearing near segment interfaces. For example, it may be determined that one set of volume data depicts a segment, such as a piece of metal, which is not depicted in other sets of volume data. For the set of volume data that depicts this segment, it would be undesirable to interpolate volume values partly from within the segment and partly from outside it when generating a sample value, because such a sample value would not effectively represent either of the segments. Therefore, if it is determined that the given sampling location 214, and a surface of the segment to which the given sampling location 214 belongs, meet a proximity condition (e.g. they are separated by less than a predefined number of voxels, such as 1 voxel, or if the interpolation method used would cause volume values from multiple segments to be used when generating a sample value) for a given set of volume data, then it can be determined that the given set of volume data is not to contribute to the sample value.

While in some examples (as described above) an entire set of volume data may be ignored when calculating a sample value for a given sampling location 214, in other examples, the segmentation data may be used to determine whether a given voxel is to contribute to a sample value, based on the segmentation data for that voxel. That is, while one volume value in a set of volume data may not contribute to a given sample value, another volume value in the same set of volume data may be determined to contribute to that sample value. For example, in the example mentioned above in which one set of volume data depicts a piece of metal, the volume values whose segmentation data indicates that they represent the piece of metal may be ignored, while the volume values whose segmentation indicates that they do not represent the piece of metal, may be used, when determining a sample value for a sampling location (e.g. a sampling location near the boundary of the piece of metal).

Returning to the interpolation, in some examples, the method comprises determining an interpolation method based on the set of image characteristics for one or more of the sets of volume data. The interpolation method may be determined using fₘₐₓ mentioned above. Determining the interpolation method based on image characteristics allows the rendering process to optimize the sampling quality for different types of volume data, improving overall visualization accuracy and/or computational efficiency. For example, if the set of volume data is associated with high contrast (e.g. if fₘₐₓ is above a threshold), then a firstinterpolation method (for example one with higher accuracy, such as tri-cubic interpolation) may be used to interpolate a volume value in order to effectively show the high contrast, whereas if the set of volume data is associated with low contrast (e.g. if fₘₐₓ is below the threshold), then a computationally efficient interpolation method (such as nearest-neighbour) may be used to interpolate a volume value. The interpolation method may therefore be determined based on a contrast value (e.g. calculated as the difference between the maximum and minimum volume values in the set of data or in the segment to which the sampling location 214 belongs), and different interpolation methods may be used for different sets of volume data.

Additionally, or alternatively, the method comprises determining a kernel size for the interpolation method (a number of voxels in a given set of volume data that are to contribute to a sample value, or a maximum distance from the sampling location at which voxels are to contribute to the sample value). This determination may be performed based on fₘₐₓ. For example, the maximum distance from the sampling location at which voxels are to contribute, may be determined as 1/(4fₘₐₓ) (optionally divided by the zoom of the camera).

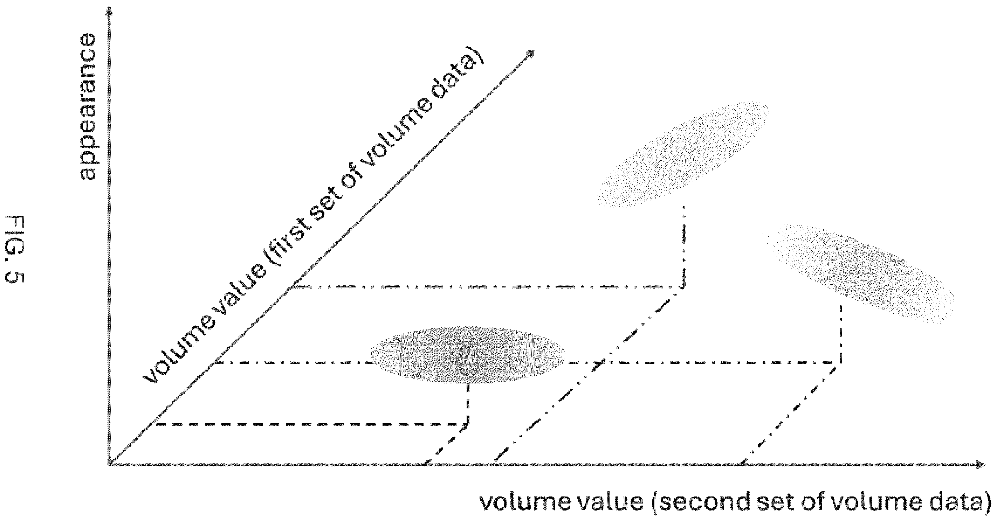

Once a volume value for a sampling location 214 has been interpolated, a transfer function may be used to determine, based on the volume value, a sample opacity and/or a sample colour for input to an illumination model. In some examples, the transfer function may take as input a plurality of volume values for a respective plurality of the sets of volume data. Referring briefly to Figure 5, there is illustrated a graph showing such a transfer function. As can be seen, the sample opacity in this example is a two-dimensional function of the (e.g. interpolated) volume value for a first set of volume data, and the (e.g. interpolated) volume value for a second set of volume data. The sample colour may also vary as a two-dimensional function of these variables. While the example in Figure 5 shows a two-dimensional function, the transfer function may take more than two inputs (i.e. volume values from three or more sets). Furthermore, while in this example sample opacity and sample colour are used as inputs to the illumination model, properties (e.g. specularity, roughness, anisotropy, or sub-surface translucency) derived from the volume values may additionally or alternatively be used as inputs to the illumination model.

Using a combination of multiple sets of volume data as input to a transfer function enables the information content from more than one imaging process to be used when generating the visual parameter values. For example, if an object such as a piece of metal is present in one set of volume data but not in another set of volume data, then the transfer function may prioritise the input from the set of volume data in which the piece of metal can be seen. In this way, as compared with a blended image showing e.g. the average of an image showing the piece of metal and an image not showing the piece of metal, the final image produced can leverage the characteristics of each of the imaging processes to incorporate additional detail in a systematic manner.

In addition, other inputs to the illumination model may be determined based on the volume data. For example, a geometric characteristic, such as a surface normal (for use in e.g. a Phong illumination model), a surface tangent (and corresponding bitangent), or a surface curvature (for use in a curvature-dependent reflectance model), may be determined. As an example, the surface normal may be determined as the gradient of the volume data at the sampling location 214, determined for example from the same set of volume values which were used to interpolate a volume value for the sampling location 214. Further inputs to the illumination model include surface optical characteristics, such as specularity, roughness, anisotropy, or sub-surface translucency. These surface optical characteristics may be determined based on the volume values themselves, or based on the segment to which the sampling location 214 belongs. The geometric characteristics and surface optical characteristics may be determined based on a combination of the plurality of sets of volume data. For example, any of the geometric characteristics referred to above may be determined as an average (e.g. a mean), across the sets of volume data (or the sets of volume data determined to contribute to the sample values), of the geometric characteristic for each set of volume data. That is, for example, the surface normal may be determined as an average of the surface normals determined for each set of volume data.

The illumination model is then used to model a light source 204 illuminating the volume. The light source 204 may be a point source, a directional light source, or may comprise a light map. The simulation light source may also be any other kind of light source - e.g. a model of any object which emits light - or a combination of multiple different light sources. In some examples, parts of the volumetric dataset 206 itself emit light. In some examples, the light source may comprise a high definition light map. The light map may, for example, when the volumetric dataset 206 is cuboidal, have six sides corresponding to outer sides of the volumetric dataset 206.

A shading computation is then applied at the sampling location 214, taking into account the simulated light at the sampling location 214, to generate an opacity and/or colour value for that sampling location 214. The shading computation may use an appropriate illumination model that takes account of the above-mentioned inputs, such as a Phong illumination model or a curvature-dependent illumination model.

The opacity and/or colour values generated for each of the sampling locations 214 for a given ray are then accumulated along the ray 208 to determine the visual parameter value for that ray 208. The visual parameter values generated for the rays corresponding to a given location in the image (e.g. pixel location) may then be summed to determine the image display value (e.g. pixel intensity value) for that location. The visual parameter values may, for example, be stored in a buffer, e.g., an HDR buffer, and composited to generate the pixel display value or values for the given location.

The methods described above may be applied not only to non-physically based volume rendering processes, such as non-physically based ray tracing, e.g., ray casting, but also to physically-based volume rendering processes such as path tracing.

Figure 3 illustrates schematically a path tracing process that may be used in the volume rendering process. Similarly to the ray tracing process, the path tracing process determines, for a given location 310 in the image, one or more visual parameter values for use in determining an image display value for the given location. A given visual parameter value of the one or more visual parameter values is generated based on a combination of the plurality of sets of volume data. The combination of the plurality of sets of volume data may be used at the same points in the path tracing process as described above with reference to Figure 2 (e.g. using different sampling distances for different sets of volume data; determining which sets of volume data are to contribute to a sample value based on segmentation data; using different interpolation methods for different sets of volume data; calculating average geometric or surface optical characteristics). In a path tracing process, the combination of the plurality of sets of volume data may be used in other, additional, ways which further utilise the information content of the volumetric dataset 206.

In the path tracing process shown in Figure 3, a path 306 is traced through a volume containing multiple sets of volume data. Unlike non-physically based ray tracing, path tracing follows the physical behavior of light more closely by simulating various scattering events that can occur as light interacts with different materials. The path 306 may include multiple path segments resulting from these scattering events.

A scattering event 302 represents a point where the path direction changes due to interaction of a simulated light ray with the volume. When a scattering event occurs, the path may continue in a new direction based on the properties of the volume at that location. The path tracing process determines when to trigger these scattering events based on accumulated opacity values along the path.

For a first set of volume data, the path tracing process determines a first accumulated opacity value along a path segment of the path 306. This accumulated opacity value may be considered to represent how much the volume has attenuated the light as it travels along the path segment. When this first accumulated opacity value exceeds a first threshold corresponding to the first set of volume data, a scattering event 302 may be triggered.

Similarly, for a second set of volume data, the path tracing process determines a second accumulated opacity value along the path 306. When this second accumulated opacity value exceeds a second, different threshold corresponding to the second set of volume data, another scattering event may be triggered. Using separate accumulated opacity values and/or thresholds for different sets of volume data enables more sophisticated control over light scattering events, allowing for visualization that more accurately represents the unique properties of each set of volume data. For example, where it is known that a first imaging process is associated with a short scattering length (e.g. in a particular segment), a lower threshold may be used when triggering a scattering event.

While in some examples the thresholds are equal, in other examples, the first threshold is a first random value generated from a first distribution, and the second threshold is a second random value generated from a second, different distribution. Using random thresholds results in a more accurate model of a volume scattering process. By using random thresholds generated from different distributions for different sets of volume data, the properties of light transport for the different imaging processes may be modelled in a more accurate way.

Absorption by the volume can be modelled, for example, by using a maximum threshold for the number of scattering events, or probabilistically by using an extinction probability density function based on the number of scattering events. In one example, a Russian Roulette algorithm may govern extinction of the path 306 by, pseudo-randomly determining at each scattering position whether to continue or to terminate the path 306.

In some examples, a scattering event may only be triggered if both the first accumulated opacity value exceeds the first threshold and the second accumulated opacity value exceeds the second threshold. It may be preferable, for reasons of computational efficiency, to identify paths that lead to a light source rather than an extinction event; for this reason, when tracing a given path segment, it may be preferable to identify a set of volume data for which a scattering event is less likely to occur. Therefore, when determining when to trigger a scattering event, it may be desirable to trigger the event only when the threshold has been exceeded for a plurality or all of the sets of volume data.

An interface scattering event 304 represents a special type of scattering that occurs at the boundary between different materials or structures within the volume. These interface scattering events are handled differently from volume scattering events that occur within a homogeneous region of the volume. The interface scattering event 304 may be triggered by, for example, a determination that the segment (for any of the sets of volume data) for the sampling location is different to the segment (e.g. for the same set of volume data) for the previous sampling location.

When a scattering event is triggered, a direction for a new ray, originating at the scattering location, is determined. For a volume scattering event 302, the direction for the new ray is determined for example using a phase function (probability density function) representing the probability of scattering for a given scattering angle. For a surface scattering event 304, the direction for the new ray is determined for example using a surface scattering distribution function (such as a bidirectional reflectance distribution function, BRDF).

The direction of the new ray may be determined based on the volume values of the sets of volume data at the scattering location. For example, for a volume scattering event 302, a phase function may be selected from among a plurality of phase functions corresponding to the sets of volume data. For a surface scattering event 304, a surface scattering distribution function may be selected from among a plurality of phase functions corresponding to the sets of volume data. Continuing the muscle-bone interface example, a surface scattering distribution function (e.g. BRDF) for the imaging process that is known to show bright reflection from bone may be selected as a surface scattering distribution function (e.g. BRDF) for determining the new ray direction.

Additionally, or alternatively, the parameters of the phase function/surface scattering distribution function (geometric characteristics or surface optical characteristics as described above) may be determined based on the sets of volume data. The parameters may be determined based on simply which set(s) of volume data are to contribute to the sampling value, or, in a similar fashion to as described above with reference to the ray tracing process, based on the volume data at the sampling location. For example, a surface normal for the surface scattering distribution function (e.g. BRDF) may be determined by averaging the surface normals calculated for the contributing sets of volume data.

As with the non-physically based ray tracing process illustrated in Figure 2, the path 306 includes a plurality of sampling locations that may be different for the different sets of volume data. In some examples, the path tracing process comprises determining, for a given sampling location on the path segment, a contributing set of volume data from among the plurality of sets of volume data. The contributing set(s) of volume data are then used to determine the volume values to be input to the illumination model.

The contributing set(s) of volume data may be determined based on a ray type for the path segment. The ray type may be, for example, a primary ray, a secondary ray or a shadow ray 308. The primary ray originates at the viewpoint 212. A secondary ray is any ray along the simulated path other than the primary ray. A shadow ray 308 is a ray chosen as a ray that extends between a light source (e.g. second light source 310) and a sampling location.

For example, the contributing set(s) may be determined based on the precision (e.g. contrast, or alternatively, number of bits used to represent each volume value) of the sets of volume data. For example, if the path segment is a primary ray, then the contributing set(s) of volume data may be chosen as a set of volume data associated with high precision (e.g. high contrast). If the path segment is a secondary ray or a shadow ray 308, a set of volume data associated with low precision (e.g. a low number of bits used to represent each volume value) may be chosen. This may allow for a good balance between rendering accuracy and computational efficiency, because the primary ray is a heavy contributor to the final opacity/colour value for a given path.

Additionally, or alternatively, the contributing set(s) of volume data may be determined based on whether the path segment resulted from a volume scattering event 302 or an interface scattering event 304. For example, if the scattering event is an interface scattering event occurring at e.g. a muscle-bone interface, then a set of volume data from an imaging process that is known to show bright reflection from bone may be determined as a contributing set of volume data.

Additionally, or alternatively, the contributing set(s) of volume data may be determined based on a distance between the sampling location and a location of a scattering event that resulted in creation of the path segment, or the number of path segments traversed by the path up to the path segment. For example, the distance may be compared with a volume scattering path length (i.e. a value representative of how far light typically travels in the volume) for a given set of volume data, and that set of volume data may be determined to contribute to a volume value if the distance is shorter than the path length, and determined not to contribute to the volume value if the distance is longer than the path length. This enables sets of volume data to be correctly selected during shading.

Additionally, or alternatively, the contributing set(s) of volume data may be determined according to a configuration defined by a user of a program implementing the volume rendering process, or a configuration that is pre-set in the program. The configuration may take account of any of a range of factors to determine the contributing set(s) of volume data. For example, the configuration may use a body region (e.g. heart, lung) represented by the sampling location. Additionally or alternatively, the configuration may take account of at least one of the imaging processes used to generate the sets of volume data. For example, the configuration may select set(s) of volume data obtained by a certain imaging process or using a certain imaging device, for example according to the body region represented by the sampling location. Additionally or alternatively, the configuration may take account of a process (e.g. a clinical reading process) that is used to interpret the image. For example, the contributing set(s) of volume data may be chosen as sets of volume data that are known to have good contrast for certain body regions/boundaries between body regions, if the process used to interpret the image is one that uses those body regions (e.g. to make a diagnosis).

The path 306 may eventually exit the volume. In addition to the shading at the sampling locations, a further shading step may be performed where a light source function for the exiting path is used to determine a colour and/or opacity value. According to certain examples of the present disclosure, the light source function is determined based on which sets of volume data were used during accumulation of sample values along the path. Different imaging processes may be associated with different light source functions; for example, multi-spectral CT may be modelled with an ambient light source that has a uniform intensity for all wavelengths, along with a point light source that has different intensities for different wavelengths. Determining a light source function based on which sets of volume data was/were used during path traversal may enable light transport to be modelled in a way which is more accurate and/or more suitable for conveying visual information to a user. The light source function may be determined as the light source function for the imaging process whose associated set of volume data was most commonly used during the accumulation of opacity values. Alternatively, the light source function for the imaging process whose associated set of volume data was used during accumulation for the primary ray, or for the exit ray, may be used. Additionally, or alternatively, the light source function may be determined based on whether an initial scattering event along the path is a volume scattering event or a surface scattering event. For example, using a light source whose associated set of volume data was used during accumulation for the exit ray may be useful when it is desired to convey information regarding the first interaction of light with the volume, while using the primary ray may be useful when it is desired to convey information regarding the part of the volume (e.g. a surface) that faces the viewpoint 212.

The method thus enables enhanced visualization of the volumetric dataset 206 by generating visual parameter values based on a combination of multiple sets of volume data. When different imaging processes capture the same volume, each process provides unique information based on its specific imaging characteristics. By combining these diverse datasets during the volume rendering process rather than using only a single reconstruction result, the visualization preserves and integrates information that would otherwise be lost, resulting in more comprehensive and informative renderings.

The approach may provide improved capabilities for displaying volume data to a user, e.g., to aid in medical diagnosis or study, through direct incorporation of multi-dimensional, multi-spectral data in the rendering process. Rather than, for example, simply blending fully rendered images at the pixel level, the method integrates the underlying volumetric data from different imaging processes during the rendering calculations.

The rendering technique may, for example, allow radiologists to gain new insights by directly incorporating the multi-dimensionality of multi-spectral data into the rendering process. Rather than simply blending the individual pixel values of fully rendered images, the method works with the underlying volumetric data to create a more integrated representation. This approach may enable medical professionals to better visualize complex relationships between different tissue types or structures that may only be apparent when multiple imaging characteristics are considered simultaneously.

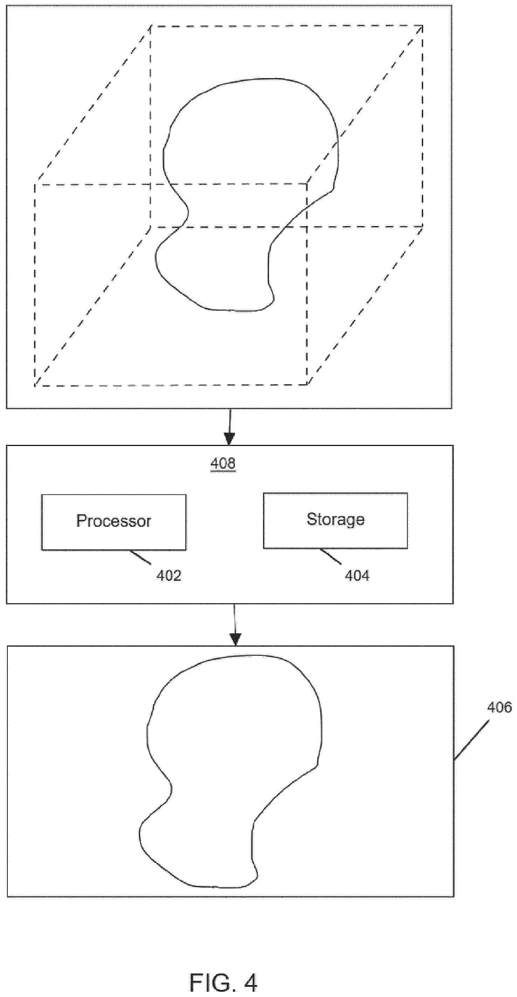

Figure 4 illustrates an example apparatus for carrying out the method shown in Figure 1. The apparatus 408 includes a processor 402 and a storage 404. The storage 404 may comprise a non-transitory computer-readable medium storing instructions that, when executed by the processor 402, cause the processor 402 to perform the method described with reference to Figure 1. The storage 404 may also store a volumetric dataset 206 comprising a plurality of sets of volume data.

The processor 402 may be any suitable processing device, such as a central processing unit (CPU), a graphics processing unit (GPU), a field-programmable gate array (FPGA), an application-specific integrated circuit (ASIC), or any other suitable processing device. In some examples, the processor 402 may include multiple processing cores or multiple discrete processing devices working in conjunction to perform the processing operations described herein.

The storage 404 may comprise any suitable storage medium, such as random access memory (RAM), read-only memory (ROM), flash memory, a hard disk drive, a solid-state drive, or any other suitable storage medium. The storage 404 may be directly coupled to the processor 402 or may be coupled via a data bus or network connection.

The apparatus 408 may generate an image 406 based on the volumetric dataset 206. The image 406 may be displayed on a display device (not shown) coupled to the apparatus 408. The image 406 is rendered using the volume rendering process described with reference to Figure 1 (and optionally using the ray tracing process described with reference to Figure 2 and/or the path tracing process described with reference to Figure 3), wherein visual parameter values are generated based on a combination of the plurality of sets of volume data in the volumetric dataset 206.

The processor 402 may execute instructions to perform operations including selecting different sets of volume data from the volumetric dataset 408 for different operations in a rendering algorithm, as described with reference to Figure 1. The processor 402 may then generate visual parameter values based on the selected sets of volume data and use these values to determine image display values for the image 406.

The above embodiments are to be understood as illustrative examples of the invention. Other embodiments are envisaged. For example, while in the above examples the plurality of imaging processes are performed concurrently, it is possible for the plurality of imaging processes to be performed at different times, with the sets of volume data being in close registration with one another and suitable for combining.

It is to be understood that any feature described in relation to any one embodiment may be used alone, or in combination with other features described, and may also be used in combi-nation with one or more features of any other of the embodi-ments, or any combination of any other of the embodiments. Furthermore, equivalents and modifications not described above may also be employed without departing from the scope of the invention, which is defined in the accompanying claims.

## Claims

1. A computer-implemented method for rendering a volumetric dataset (206) representing a volume, the volumetric dataset comprising a plurality of sets of volume data, the plurality of sets of volume data having been obtained (102) by a respective plurality of imaging processes performed on the volume, wherein each imaging process of the plurality of imaging processes has a respective, different set of imaging characteristics, the method comprising:
performing (104) a volume rendering process, using the plurality of sets of volume data, to render an image (406) of the volume, the volume rendering process comprising:
generating, for a given location in the image, one or more visual parameter values for use in determining an image display value for the given location;
wherein a given visual parameter value of the one or more visual parameter values is generated based on a combination of the plurality of sets of volume data.

2. The method of claim 1, wherein a first of the sets of imaging characteristics comprises a first set of wavelengths of electromagnetic radiation, and a second of the sets of imaging characteristics comprises a second, different set of wavelengths of electromagnetic radiation.

3. The method of any of the preceding claims, wherein generating the one or more visual parameter values comprises performing a ray tracing process, wherein performing the ray tracing process comprises, for a ray (208, 210) traced during the ray tracing process:
performing a sampling process at a plurality of sampling points (214) along the ray, the sampling process comprising generating, for the plurality of sampling points, a set of respective sample values based on at least one of the sets of volume data; and
using the respective sample values to generate a visual parameter value of the one or more visual parameter values.

4. The method of claim 3, wherein performing the ray tracing process comprises:
for a first ray (208) traced during the ray tracing process, performing a first sampling process at a first plurality of sampling points separated by a first sampling distance along the first ray, the first sampling process comprising generating, for the first plurality of sampling points, a first set of respective sample values based on a first of the sets of volume data; and
for a second ray (210) traced during the ray tracing process, performing a second sampling process at a second plurality of sampling points separated by a second sampling distance along the second ray, the second sampling process comprising generating, for the second plurality of sampling points, a second set of respective sample points based on a second of the sets of volume data,
wherein the method comprises:
determining the first sampling distance based on the set of imaging characteristics of the first of the sets of volume data; and/or
determining the second sampling distance based on the set of imaging characteristics of the second of the sets of volume data.

5. The method of any of the preceding claims, comprising:
identifying, using a or the first of the sets of volume data, an approximate location of a boundary between two media in the volume; and
identifying, using a or the second of the sets of volume data, a refined location of the boundary.

6. The method of any of the preceding claims, wherein generating the given visual parameter value comprises determining, for a given sampling location in the volumetric dataset from which the given visual parameter value is at least partly calculated, whether a given set of the sets of volume data is to be used when determining a sample value for the given sampling location, wherein the determination is based on segmentation data indicative of a segment associated with the sampling location.

7. The method of claim 6, wherein determining whether the given set of the sets of volume data is to be used when determining the sample value comprises determining that the given set of volume data is not to contribute to the sample value responsive to determining that the given sampling location, and a surface of the segment with which the given sampling location is associated, meet a proximity condition.

8. The method of any of the preceding claims, comprising:
determining, based on the set of image characteristics for one or more of the sets of volume data, an interpolation method;
interpolating a volume value for a sampling location from a or the first of the sets of volume data using the interpolation method; and
using the volume value in generating the one or more visual parameter values.

9. The method of claim 8, wherein the interpolation method is for a or the first of the sets of volume data, and the method comprises:
determining, based on the set of image characteristics for a or the second of the sets of volume data, a further interpolation method, and interpolating a further volume value for a or the sampling location from that set of volume data; and
using the further volume value in generating the one or more visual parameter values.

10. The method of any of the preceding claims, wherein the volume rendering process comprises a path tracing process.

11. The method of claim 10, wherein the path tracing process comprises:
determining a first accumulated opacity value along a path using a or the first of the sets of volume data, and comparing the first accumulated opacity value with a first threshold corresponding to that set of volume data;
triggering a scattering event (302) based at least in part on a determination that the first accumulated opacity value exceeds the first threshold;
determining a second accumulated opacity value along a or the path using a or the second of the sets of volume data, and comparing the second accumulated opacity value with a second, different threshold, corresponding to that set of volume data; and
triggering a scattering event based at least in part on a determination that the second accumulated opacity value exceeds the second threshold.

12. The method of claim 11, wherein the first accumulated opacity value and the second accumulated opacity value are for the same path, and the scattering event is triggered only if both the first accumulated opacity value exceeds the first threshold and the second accumulated opacity value exceeds the second threshold.

13. The method of any of claims 10 to 12, wherein the path tracing process comprises determining, for a sampling location on a path segment of a path traced during the path tracing process, a contributing set of volume data from among the plurality of sets of volume data, based on at least one of:
a ray type for the path segment, the ray type being a primary ray, a secondary ray or a shadow ray (308);
if the ray type for the path segment is a secondary ray, whether the path segment resulted from a volume scattering event (302) or an interface scattering event (304);
a distance between the sampling location and a location of a scattering event that resulted in creation of the path segment;
a number of path segments traversed by the path up to the path segment;
an input received via a user interface;
a body region represented by the sampling location;
at least one of the imaging processes;
an imaging device used in at least one of the imaging processes; or
a process used to interpret the image.

14. The method of any of claims 10 to 13, wherein the path tracing process comprises triggering a scattering event at a scattering location, and triggering the scattering event comprises determining, based on volume values of the sets of volume data at the scattering location, a direction for a new ray to be used in the path tracing process, the new ray originating at the scattering location.

15. Apparatus (408) comprising a processor (402) and a storage (404) comprising a set of machine-readable instructions which when executed by a processor cause the processor (402) to perform the method of the preceding claims.
